# EUROPEAN PATENT APPLICATION

(11) **EP 2 365 126 A1**
(43) Date of publication of application: **14.09.2011**
(21) Application number: 10155629.8
(22) Date of filing: 05.03.2010
(51) Int. Cl.: D21C 5/02, D21H 11/14, D21H 17/01, D21H 27/00, B65D 1/00, B65D 1/02, D21B 1/08, D21B 1/32

(54) **Paper product, particularly for hygienic-sanitary employments**

(71) Applicant: Cartiera Lucchese S.p.A., 55016 Porcari LU (IT)
(72) Inventor: PASQUINI, FRANCO, 55016, Porcari (Lucca) (IT)
(74) Representative: Fuochi, Riccardo

(57) **Abstract**

Paper product, particularly for hygienic-sanitary employments, characterized by the fact that it comprises cellulose fibres deriving, for at least 90% in weight, from the treatment of portions of disposable containers (2) for liquids and/or drinks of the poly-coupled type.

## Description

### TECHNICAL FIELD OF THE INVENTION

The present invention relates to a paper product, particularly for hygienic-sanitary employments.

More in particular, the present invention relates to a paper product for hygienic-sanitary employments, such as toilet paper, wipes, kitchen cloths, napkins, handkerchiefs, and the like.

### BACKGROUND ART

Paper products for hygienic and sanitary uses, such as toilet paper, wipes, kitchen cloths, napkins, handkerchiefs, and the like, used daily in large quantities in any public or private place, have the known drawback that, once their specific use has been exploited, they can no longer be retrieved to make new paper, i.e., recycled paper, because the particular use made of them irreversibly damages the fibres and/or determines an excessive pollution and a high contamination of the fibres themselves due to the external agents, e.g., oils and other substances.

The above paper products are nowadays made prevalently using virgin cellulose fibres, obtained directly, as is known, from the wood of cut trees.

It is evident therefore that the manufacture of such products, which as we have seen are widely used, and to an increasing extent, in developed countries, has a considerable environmental impact: this environmental impact is doubly concerning inasmuch as it requires, on the one hand, the cutting down of a large number of trees each year, and on the other, because the products made this way, once used, cannot effectively be used again.

### OBJECTS OF THE INVENTION

The technical aim of the present invention is therefore to improve the state of the art.

Within the ambit of such technical aim, an object of the present invention is to provide a paper product, particularly for hygienic-sanitary employments, whose manufacture has a sensibly reduced environmental impact than that implied in the manufacture of the products which are on the market at present.

Another object of the present invention is to manufacture a paper product, particularly for hygienic-sanitary employments, the production of which requires the cutting down of less trees to provide the virgin cellulose fibre.

These and other objects are all achieved by this paper product, particularly for hygienic-sanitary employments, according to one or more of the enclosed claims.

A major technical advantage consists in the fact that the paper product according to the present invention is made using objects which in most cases would otherwise end up being eliminated in waste dumps or thermal waste units, and consequently, the environmental impact caused when these objects are disposed of is considerably reduced, including thanks to the fact that the treatment of the disposable poly-coupled containers for liquids allows retrieving, not only the cellulose fibres but also the part of plastic material contained in them.

Another technical advantage consists in the fact that recycled cellulose fibres are used, instead of those of virgin type, to make paper products, like those for hygienic-sanitary use, which, excessively damaged and/or polluted for the use to which they are put, cannot be further recycled.

A further technical advantage is tied to the fact that most of the cellulose fibres used have not undergone polluting chemical bleaching processes or the addition of dyes or inks of chemical origin.

### BRIEF DESCRIPTION OF THE DRAWINGS

These and other advantages will be better understood by any technician of the field from the following description and annexed drawings, given as not limited example, in which:
- figure 1 is a detailed cross section of an embodiment of the paper product according to the present invention;
- figure 2 is a schematic axonometric view of a disposable container for liquids and/or drinks of the poly-coupled type.

### EMBODIMENTS OF THE INVENTION

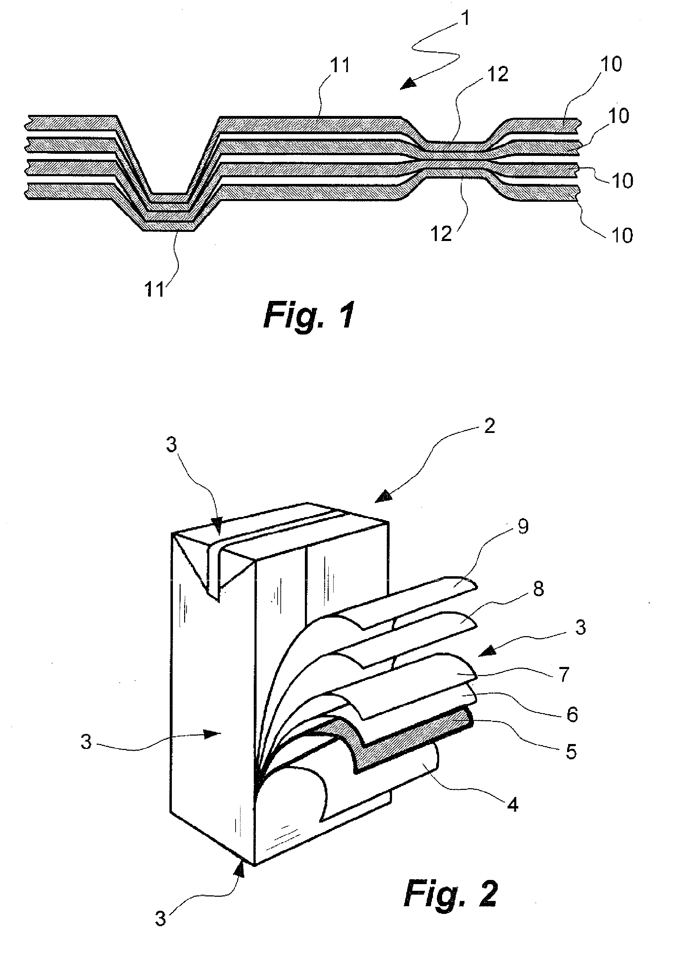

With reference to the enclosed figure 1, globally by 1 is indicated, in a sectioned detail, a portion of paper product according to the present invention.

In the embodiments of the paper product according to the invention that follow, individual characteristics, shown in relation to specific embodiments, can in fact be interchanged with other different characteristics, existing in other embodiments.

The paper product 1 according to the present invention is particularly, but not only, designed for hygienic-sanitary type employments, obviously both within public buildings, or in any case within the ambit of public places in general, and in private ambit. More in detail, the paper product according to the present invention can be advantageously used, as will become clearer in the course of the present invention, to make toilet paper, wipes, rolls, rolled kitchen cloths, rolled and folded towels, napkins, sheets for doctors' couches and other similar objects.

Nevertheless, it must be underlined that the paper product according to the present invention can also be used for other different purposes, without in any way limiting the purposes of the present invention.

The paper product 1 according to the present invention advantageously comprises cellulose fibres deriving, for at least 90% in weight, from the treatment of portions of disposable containers for liquids and/or drinks of the poly-coupled type. More in detail, such containers comprise walls each made up of one or more sheets of paper and/or card coupled to one or more sheets of plastic material and to one or more sheets of metal material.

The attached figure 2 is a schematic representation of one of such containers, generally indicated by the reference number 2.

The container 2 of poly-coupled type typically consists for example of walls 3 reciprocally at right angles to one another, or also of a different number of walls 3, arranged differently. In a way in itself known and which does not represent the subject of the present invention, and which is only provided as a non-restrictive example, each of the walls 3 comprises, proceeding from outside towards the inside, a first sheet 4 of plastic material, a second sheet 5 of paper or card, a third sheet 6 of plastic material, a fourth sheet 7 of metal material, a fifth sheet 8 of plastic material and a sixth sheet 9 again of plastic material. Obviously, the container 2 can also be distinguished by a different way of coupling between the sheets of paper, plastic material and metal: this characteristic is in no way a limitation to the present invention.

The sheets 4, 5, 6, 7, 8, 9 are reciprocally coupled the one to the other so as to adhere perfectly to each other, without using adhesives: this result is obtained using production technologies known to the expert in the sector and which do not form the subject of the present invention.

More in detail, the sheets 4, 6, 8, 9, mainly with covering function, are made of plastic material, e.g., of the polyethylene type, or of other equivalent materials.

The third sheet 7, which mainly acts as a barrier against the light and oxygen, is on the other hand made of metal material consisting for example of aluminium, or again of other materials with equivalent characteristics.

The portions of the containers 2, from which to obtain cellulose fibres to make the paper product 1 according to the present invention, come mainly, and in any case in an extremely variable way in relation to the different geographic areas, from the pre-sorted waste collection of such already-used disposable containers 2.

Alternatively, the above portions of the containers 2 consist of production scraps and rejects, coming directly from the manufacturers of the containers themselves.

The cellulose fibres coming from the treatment of portions of containers 2 of the poly-coupled type, and particularly from the second sheet of paper 5 of each of the walls 3, are of the non-bleached type, i.e., not treated with known chemical substances such as chlorine, chlorine dioxide, oxygen, hydrogen peroxide, or others, which determine, according to known technologies, the change of the colour of the fibres from their natural colour, i.e., Havana/beige, to white.

The cellulose fibres making up the paper product, in the remaining percentage in weight - therefore at most 10% - are of the virgin type; or else, they come from pre-sorted waste collection of paper products or products of other nature; or yet again, they consist of a mix of the two above types.

The paper product 1 according to the present invention, therefore, once made, has the typical colour of unbleached cellulose fibre, i.e., Havana/beige, and can thus be directly marketed, without adding inks or dyes, thereby achieving major technical advantages which will be better explained later.

As shown in detail in figure 1, the paper product 1 according to the present invention comprises, on one of its embodiments, a plurality of sheets and/or strips 10 coupled the one to the other.

More in detail, the above sheets and/or strips 10 comprise, in one embodiment, one or more distributions of drawings in relief 11; the sheets and/or strips 10 also comprise one or more distributions of imprinted drawings 12, e.g., in correspondence to which the sheets 10 themselves are fastened the one to the other. Such drawings 11, 12 can be made, for example, by means of the known method of paper embossing, or by means of other equivalent technologies.

In one embodiment of the present invention, the paper product 1 comprises a sheet or a strip - or a plurality of coupled sheets or strips 10 - plain or folded, e.g., to make a handkerchief, a napkin and the like.

In another embodiment of the present invention, the paper product 1 comprises a sheet or a strip - or a plurality of coupled sheets or strips 10 - wrapped around a cylindrical support roller, also called core, e.g., to make, for example, a roll of toilet paper, a roll of kitchen wipes, and the like.

Hereinafter, a brief description is provided of the essential stages, by way of example only and without being limitative or exhaustive, of the procedure for making the paper product 1 according to the present invention, i.e., in particular the treatment of the disposable containers 2 of the described type.

Said treatment initially envisages a high-density pulp reduction phase, with consistencies close to 15%, of the portions of disposable containers 2, deriving from pre-sorted collection and/or scraps.

Subsequently, a medium-density sieving phase of the mixture is envisaged, close to 5%, to almost completely remove the cellulose fibres, i.e., the fibrous mixture, from the remainder, consisting of cellulose fibre, plastic material and aluminium.

Subsequently, a first washing phase of the fibrous mixture is performed, with sieving of the remainder, i.e., paper, plastic and aluminium, at low density, i.e., below 5%; this way, it is then possible to separate the remaining fibrous fraction from the non-fibrous fraction, i.e., plastic and aluminium. Subsequently, the rough filtering of the fibrous mixture is performed, through several stages with different cleaning capacities and qualities to trap any residues and impurities that might have passed through the previous sieve.

Afterwards, fine filtering of the fibrous mixture is performed to trap any tiny residues of plastic and/or metal material that have accidentally passed through the previous stages.

The mixture will then have to be subjected to heat thickening and treatment, at 100°C, with recovery of the extracted water, i.e., the so-called process waters.

At this point, the non-fibrous fraction, i.e., essentially the plastic material and the metal material, is sieved to separate from it any heavy contaminant elements such as stones, large pieces of metal, etc.

Afterwards, final washing, pressing and drying of the non-fibrous fraction is performed so as to prepare the plastic and the metal material for any subsequent recycling treatment, which does not specifically concern the present invention.

Finally, the process waters are treated to recycle them and completely use them again in the plant.

Thanks to this solution, clear and major technical advantages are obtained, as is clearly indicated by the preceding detailed description.

A first technical advantage consists in the fact that the paper product according to the present invention is made using, in very high quantities, disposable objects, such as containers of poly-coupled type, which would otherwise be eliminated in dumps or thermal-waste units: the environmental impact due to the disposal of these disposable objects is thus considerably reduced.

A further technical advantage consists in the fact that the manufacture of the paper product according to the present invention also allows retrieving in large quantities, not only said cellulose fibre of the disposable containers, but also the plastic materials of those same containers, which can be transformed into granules that can be used again by companies specialised in plastic extrusion: this fact also obviously translates into a saving as regards the use of petroleum derivative materials.

Yet another technical advantage consists in the fact that the manufacture of the paper product according to the present invention allows obtaining a significant advantage of the environmental type in terms of saving of water used in the process, of energy saving and of reduction of emissions into the atmosphere, if compared with the process starting with wood from trees.

Yet another technical advantage consists in the fact that recycled cellulose fibres are used instead of those of virgin type, to make paper products, such as those for hygienic-sanitary use, which can no longer be further recycled, because they are excessively damaged and/or polluted for the use to which they are put. Another major technical advantage achieved by the present invention consists in the fact that, to make the paper product, no inks or dyes are used to transform into white, or into other colour, the natural colour of the recycled fibre. This fact, besides providing an evident saving in process costs, also has a positive environmental impact, inasmuch as such substances would end up directly in the environment, considering that paper products for hygienic-sanitary employments cannot be further recycled.

It has therefore been seen how the described invention achieves the set objects.

The present invention has been described according to preferred embodiments, but equivalent variations can be conceived without exiting from the protection ambit offered by the following claims.

## Claims

1. Paper product, particularly for hygienic-sanitary employments, **characterized by** the fact that it comprises cellulose fibres deriving, for at least 90% in weight, from the treatment of portions of disposable containers (2) for liquids and/or drinks of the poly-coupled type.

2. Paper product according to the claim 1, wherein said cellulose fibres are of the non-bleached type.

3. Paper product according to one of the preceding claims comprising cellulose fibres which, at most 10% in weight, are of the virgin type.

4. Paper product according to one of the preceding claims, comprising cellulose fibres which, at most 10% in weight, come from the pre-sorted waste collection of paper products of other nature.

5. Paper product according to one of the preceding claims to which no inks or dyes are added to modify the natural colour of the fibres.

6. Paper product according to one of the preceding claims, wherein said portions of containers (2) of the disposable type come from the pre-sorted waste collection of such containers.

7. Paper product according to one of the preceding claims, wherein said portions of containers (2) of the disposable type are composed of production scraps and rejects.

8. Paper product according to one of the preceding claims, wherein said disposable containers (2) of the poly-coupled type comprise walls (3) each made up of one or more sheets of paper and/or card (5) coupled to one or more sheets of plastic material (4), (6), (8), (9) and to one or more sheets of metal material (7).

9. Paper product according to one of the preceding claims, comprising a plurality of sheets and/or strips (10) coupled the one to the other.

10. Paper product according to one of the preceding claims, wherein said sheets and/or strips (10) comprise at least one distribution of drawings in relief (11) and/or imprinted drawings (12).

11. Paper product according to one of the preceding claims, wherein said sheets and/or strips (10) are wrapped around a cylindrical support roller.
